# EUROPEAN PATENT APPLICATION

(11) **EP 3 703 151 A1**
(43) Date of publication of application: **02.09.2020**
(21) Application number: 19863963.5
(22) Date of filing: 31.05.2019
(51) Int. Cl.: H01M 2/08, H01M 2/12, H01M 10/04, H01M 10/0525

(54) **BUCKLE-TYPE MINIATURE RECHARGEABLE LITHIUM BATTERY STRUCTURAL ASSEMBLY**

(30) Priority: 17.01.2019 CN 201910044428
(71) Applicant: Weifang Yuyuan Electronics Co., Ltd., Weifang, Shandong 261000 (CN)
(72) Inventor: DONG, Qigang, Weifang Shandong 261000 (CN)
(74) Representative: Sun, Yiming
(86) International application number: PCT/CN2019/089484
(87) International publication number: WO 2020/147243

(57) **Abstract**

A miniature button rechargeable lithium battery structure assembly includes an upper housing, a lower housing and an apron, which relates to the technical field of electronic structure assembly. The upper housing is snap-fit into the lower housing, and a side wall of the upper housing and a side wall of the lower housing are sealed with the apron. The present invention solves the competing requirements between the explosion-proof structure and the sealed structure in the traditional technology. The problem is solved that when the explosion-proof performance is improved, the yield of the battery assembly is reduced, and the problem is solved that when the sealing performance is improved, the battery capacity is reduced.

## Description

### TECHNICAL FIELD

The present disclosure relates to the technical field of electronic structure assembly, and more particularly relates to a miniature button rechargeable lithium battery assembly.

### BACKGROUND

Rechargeable and reusable lithium battery industry has witnessed a rapid development in recent years as a result of the introduction of China's new energy policy. The consumer electronics market has accounted for over half of the country's' economy. The major segments of the consumer electronics market include mobile phones, notebook computers, tablets, wearables, among others. The wearable devices are mainly smart bracelets, smart watches, and Bluetooth headsets. However, wearable devices only use small-sized lithium-ion batteries because of the relatively small size of the wearable devices. Because of the small battery size, the endurance of such smart wearable devices is relatively short. At present, major manufacturers are seeking to reduce power consumption of smart wearable devices as well as improving the security and increasing the capacity of lithium batteries. The present disclosure is intended to solve the problem of using non-soft-packed batteries with small volume structural parts to achieve large capacity and high security performance. At present, this type of batteries are a series of batteries with conventional models such as 0854/1054/1254/1454/1654. As good example is Model 1254 battery. A qualified 1254 battery should have the following advantages: 1. ensuring assembly stability, and ensuring good product yield during production; 2. good sealing performance; 3. good explosion-proof performance; 4. having a high explosion-proof performance under the premise of ensuring its sealing performance; 5. strong endurance; and 6. a high capacity ratio.

The State Intellectual Property Office of the People's Republic of China published Patent number ZL201080024489.6. The solution in Patent number ZL201080024489.6 includes a battery recess and a battery cover. The battery recess includes a bottom area, a side area, an edge area placed between the bottom area and the side area, and a cutting edge. The battery cover includes a cover area, a side area, an edge area placed between the cover area and the side area, and a cutting edge, which are connected to each other via a seal. The method includes the following steps: applying the seal to the side area of the battery cover; pushing the battery cover with the seal into the battery recess to form a region in which the side area and the region overlap each other; and applying pressure on the side area of the battery recess to seal the housing. The height of the side area and the height of the region are matched with each other in the following manner: the cutting edge is pressed against the side area by pressure to achieve the sealing effect on the battery assembly.

The analysis of Patent number ZL201080024489.6 shows that the wall thicknesses of the apron in the battery structure assembly are all the same, and the apron is tightly sealed by the pressure of the housing shrinking in the radial direction, so that sealing performance cannot be ensured, thereby leading to the leakage of liquid and failure during normal use.

The State Intellectual Property Office of the People's Republic of China published Patent number ZL201711173624.3. The solution in Patent number ZL201711173624.3 includes a cover, a housing, and a sealing ring. The cover and the housing both have cylindrical structures with a covered portion. The cover and the housing are fastened together so as to form a closed space for accommodating a battery core. The sealing ring is located between a side wall of the cover and a side wall of the housing. The sealing ring, upon reaching the set temperature, can shrink or tear, so as to form a gap between the side wall of the cover, and the side wall of the housing for pressure relief. The sealing ring of the battery can shrink or tear at a set temperature to release the pressure and has the characteristic of excellent security performance.

However, the analysis of Patent number ZL201711173624.3 shows that although this solution can ensure the sealing performance of the battery to a certain extent, in order to ensure the sealing performance, the amount of activity between the upper and the lower housings is small or even zero, which directly leads to the loss of the explosion-proof function, leads to failure of normal pressure relief of the battery, and has security risks.

The State Intellectual Property Office of the People's Republic of China published Patent number ZL201710772982.X. The solution in Patent number ZL201710772982.X includes a first pole case, a second pole case, an insulating seal ring and a battery core. The first pole case, the second pole case, and the insulating seal ring form an accommodation cavity together, and the battery core is placed in the cavity. The second pole case includes a body and an edgefold folded downward from the periphery of the body. The insulating seal ring includes a main body portion and an inner curved portion extending inwardly from the main body portion. The main body portion is sandwiched between the edgefold of the second polar case and the first polar case. The inner curved portion is located below the edgefold, and the end face of the inner curved portion does not exceed an inner side face of the edgefold of the second polar case. This invention also relates to a button housing. This invention improves the structure of the insulating seal ring, does not occupy the internal space of the second polar case, enhances the stability of the internal structure of the button battery, while increasing the capacity, and improves the sealing performance of the insulating seal ring.

However, the analysis of Patent number ZL201710772982.X shows that the apron in this solution is an apron of an overall immersion type. Although the sealing effect of the apron is increased, the explosion-proof performance of the apron is reduced, such that the opening resistance of the battery after failure is increased, thereby failing to normally start up the explosion-proof function.

The State Intellectual Property Office of the People's Republic of China published Patent number ZL201180049997.4. The solution in Patent number ZL201180049997.4 includes a battery cup and a battery cover. The battery cup and the battery cover are connected to each other via a seal, and each of the battery cup and the battery have a bottom, a circumferential housing, an edge region connecting the bottom and the housing, and an end cutting edge. The end cutting edge forms an open edge of a half-housing. The bottom of the battery cup and the bottom of the battery cover are preferably both flat and preferably both round shaped (or possibly oval). The housing of the battery cup and the housing of the battery cover may be preferably described as a hollow cylindrical annular section having a round shaped cross section (or possibly an oval cross section). The diameter of the hollow cylindrical annular section is preferably exactly equal to or larger than the diameter of the relevant round shaped bottom. Generally, the housing of the battery cup and the housing of the battery cover are arranged vertically relative to the relevant bottom, with the technical effect of a safe trip structure that ensures a safe operation of the button battery in a reliable manner.

However, the analysis of Patent number ZL201180049997.4 shows that this solution can achieve the pressure relief for the battery, because the pressure relief position is a side pressure relief, the explosion-proof method makes a liquid leakage phenomenon often occur when the battery structure assembly is assembled in the manufacturing process, which directly leads to reducing the yield.

The State Intellectual Property Office of the People's Republic of China published Patent number ZL201721393028.1. The solution in Patent number ZL201721393028.1 includes an inner case, an outer case, a battery core and an insulating film. The inner case and the outer case are both barrel shaped. The outer case is installed outside the inner case. The battery core is arranged inside the inner case. The insulating film is arranged between the inner and outer case. The top of the inner case is provided with a concave shoulder portion. The top of the outer case is provided with a blank holder, which is pressed above the insulating film. The inner case has a two-stage step. A diameter of the inner case at an upper part of the two-stage step is smaller than the diameter of the inner case at a lower part of the two-stage step. A beam waist is disposed at a portion of the outer case corresponding to the two-stage step. The beam waist is recessed inward, and is clamped at the two-stage step. More than one exhaust hole is provided on the inner case above the two-stage step. This present utility model adopts a segmented step structure which cooperates with an air hole provided on the inner case, so that when the expansion occurs, the pressure inside the battery can be released without explosion.

However, the analysis of Patent number ZL201721393028.1 shows that the cooperation capacity ratio of the structure components in this solution is low, thereby reducing the endurance of the battery. Although the sealing performance is improved as a result, the structures in this solution are conjoined tightly, the electrolyte cannot be released when the explosion-proof pressure is released, so as to reduce the explosion-proof performance of the battery.

Top-ranking batteries of Model 1254 are currently manufactured by companies in the market, and mainly include the following models, specifications and performances thereof, are analyzed:
1. LIR1254: a size of an outer shape is 12.5^{∗}5.4 mm with a standard capacity of 45 mAh, with volume at 211.95 mm³, and a ratio of capacity to volume of 21.23%;
2. CP1254(1): a size of an outer shape is 12^{∗}5.4 mm, with a standard capacity of 50 mAh, with volume at 203.472 mm³, and a ratio of capacity to volume of 24.57%;
3. CP1254(2): a size of an outer shape is 12.1^{∗}5.4 mm, with a standard capacity of 60 mAh, with volume at 205.1676 mm³, and a ratio of capacity to volume of 29.24%; and
4. CP1255: a size of an outer shape is 12.5^{∗}5.5 mm, with a standard capacity of 50 mAh, with volume at 215.875 mm³, and a ratio of capacity to volume of 23.16%.

Above data shows that the high capacity ratio is 29.24%. The battery structure in the prior art is small and complex, which directly leads to increasingly difficult manufacturing. However, due to being limited to the application of electronic products, the battery is required to be as small as possible in size, but the high endurance thereof, that is, the high capacity ratio, is necessarily ensured. According to the prior art, if 0.5% of the capacity ratio are improved, a new mold needs to be opened. A person skilled in the art, needs to spend a large amount of effort to solve problems of the sealing performance, the explosion-proof performance, the assembly stability and the capacity ratio. At present, no manufacturer in the world can overcome this particular technical bottleneck. Thus, a large amount of creativity and effort is required to solve the problem.

Patent number ZL201080024489.6 discloses a possible solution regarding the problem of liquid leakage in the battery assembly, and ensures the sealing performance of the battery assembly. The patents numbered ZL201711173624.3 and ZL201710772982.X improve the sealing performance of the battery assembly on the basis of ensuring the sealing performance, and ensure the yield of the battery assembly in the manufacturing process, but leaves the explosion-proof performance inferior. The patent number ZL201721393028.1 brings the problem of low battery capacity due to the assembly occupying large internal space at the same time of solving the problem of the sealing performance. The patent number ZL201180049997.4 solves the problem of explosion-proof performance, but faces the problem of liquid leakage in the assembly of the battery. Various occurences reflect the fact that if the sealing performance of the battery assembly wants to be ensured, the explosion-proof performance may be lost; the large space is occupied, and the battery capacity is reduced. Persons skilled in the art, have mostly conducted research on the battery assembly on the basis of how to ensure the sealing performance, using either the sealing performance that ensures the reduction to reduce the explosion-proof performance, or the explosion-proof performance is ensured to reduce the sealing performance, which directly causes a reduction in the yield of the battery during the assembly process. Meanwhile, in order to ensure the sealing performance, the large internal space is occupied, thereby causing low battery capacity. All these issues affect the driving force and direction of research and the direction that a skilled person would take in this field.

After comparison and analysis, it was found that the battery structure assembly in the prior art has the following disadvantages:
first, the explosion-proof structure of the battery structure assembly is a structure without a seal, and due to the bad sealing effect of the structure, the reduction of yield caused by electrolyte leakage and failure caused by liquid leakage in the use of the battery easily occurs;
second, the volume of the battery structure assembly is large, the capacity is low, the ratio of capacity to volume is only 21.23% and 23.16%, and in order to pursue the sealing effect, the explosion-proof structure has to be cancelled, thereby reducing the security of the battery;
third, the explosion-proof pressure relief function is performed through a side leakage in the battery structure assembly, but the explosion-proof manner often causes a liquid leakage in the manufacturing process of the battery structure assembly, thereby directly reducing the yield;
fourth, the wall thicknesses of the apron in the battery structure assembly are all the same, which cannot ensure the sealing performance and results in the phenomenon of failure caused by liquid leakage during normal use;
fifth, a sealing area in the battery structure assembly is small, thereby reducing the sealing performance;
sixth, in order to ensure the sealing performance of the battery structure assembly, the amount of activity is small or even zero, which directly leads to the loss of the explosion-proof function; and
seventh, the glue in the apron of the battery structure assembly is applied in an immersion type, such that the opening resistance of the battery after failure is increased, thereby failing to normally start the explosion-proof function.

In sum, it is clear that the prior arts have obvious shortcomings and defects in practical uses, thus it is necessary to improve upon the current art.

### SUMMARY

In view of the defects in the prior art, the present invention provides a miniature button rechargeable lithium battery structure assembly for solving the competing requirements between the explosion-proof structure and the sealed structure in the traditional technology and the problems that result from that. For example, when the explosion-proof performance is improved, the yield of the battery assembly is reduced; and when the sealing performance is improved, the battery capacity is reduced.

In order to achieve the above objective, the present invention provides the following technical solution:
A miniature button rechargeable lithium battery structure assembly, includes an upper housing, a lower housing and an apron; and the upper housing is snap-fitted into the lower housing, and a side wall of the upper housing and the lower housing are sealed with the apron.

As an improvement, the wall thickness of the apron is gradually increased along the installation direction.

As an improvement, the outer wall of the apron is provided with a glue layer, and the outer wall of the apron is fixed to an inner wall of the lower housing by the glue layer.

As an improvement, each of the upper housing and the lower housing includes a cup body, and the cup opening of the cup body is connected to an extension guide barrel by a gradually expanding guide barrel.

As an improvement, in an assembled state, the extension guide barrel of the upper housing is extended to the cup body of the lower housing, then a primary sealing area is formed between the extension guide barrel of the upper housing and the cup body of the lower housing by the apron, then a secondary sealing area is formed between the cup body of the upper housing and the end of the extension guide barrel of the lower housing by the apron.

As an improvement, the end of the extension guide barrel of the lower housing is provided in a neck shape.

As an improvement, an area between the extension guide barrel of the lower housing and the cup body of the upper housing is provided with a gap, the gap is between the primary sealing area and the secondary sealing area, and a pressure relief gap is formed between the gap and the apron.

An area from the neck of the lower housing to an end of the extension guide barrel of the upper housing is a pressure relief active area.

As an improvement, in a pressure relief state, the end of the extension guide barrel of the upper housing slides over to the neck of the lower housing, the upper housing and the lower housing are separated from the primary sealing area and the secondary sealing area, then an electrolyte in the battery overflows from the end of the lower housing along the pressure relief gap.

As an improvement, the apron adopts any one of the polyetheretherketone (PEEK), polyetherimide (PEI) or polyimide (PI).

Compared with the prior art, the advantages of the present invention are as follows.

The pressing force between the battery assembly and the housing in the assembling process is improved, so as to ensure the sealing performance. The upper liquid relief is adopted to avoid the problem of easy leakage of the battery assembly in the assembly process, thereby ensuring the yield of the battery assembly at source. The dual sealing form is adopted to improve the sealing performance of the battery assembly in the use process. The apron adopts a manner of applying the glue on a single-side, which reduces the opening resistance of the battery after failure and enables the smooth start-up of explosion-proof function. The production cost is reduced, and the occurrence of polluting the work environment caused by the drop of glue from the apron is reduced, thereby enabling the smooth start-up of the explosion-proof function. The large sealing area and the sealing performance are improved. The amount of activity is improved by a piston movement, thereby ensuring the smooth start-up of explosion-proof function. The assembling stability is improved, and a high capacity ratio ensures the sealing performance under the premise of ensuring the explosion-proof function. The endurance time of the electronic product is extended. The experience of users is improved. The relevant accessories of electronic product and the security of the human body are guaranteed. The product sizes are stable, quality is improved, and yield is high. The yield and production efficiency of this type of battery are improved, and sizes, capacities, securities and sealing performances of the products are guaranteed. The structure is simple, the lifetime is increased, and the stability is high. The operation and controls are simple and convenient to easily perform large-scale manufacturing, automatic assembling, along with a wide range of applications.

### BRIEF DESCRIPTION OF DRAWINGS

In order to clearly explain specific embodiments of the present invention or technical solutions in the prior art, simple introductions are made for drawings that need to be used in the specific embodiments or depictions of the prior art below. In all the drawings, similar elements or portions are generally marked by similar reference signs. In the drawings, respective elements, or portions are not necessarily drawn according to actual proportions.
Fig. 1 is a whole structure diagram of the present invention.
Fig. 2 is a structure diagram of an upper housing of the present invention.
Fig. 3 is a structure diagram of an apron of the present invention.
Fig. 4 is a structure diagram of a lower housing of the present invention.
Fig. 5 is a structure diagram showing an assembly of the present invention.
Fig. 6 is a structure diagram of a failure state of the present invention.

In the drawings: 1: upper housing; 2: lower housing; 3: primary sealing area; 4: gradually expanding guide barrel; 5: extension guide barrel; 6: apron; 7: secondary sealing area; 8: cup body; 9: pressure relief area; 10: pressure groove; and 11: fold.

### DETAILED DESCRIPTION OF EMBODIMENTS

The embodiments of technical solutions of the present invention are further described in detail with reference to the drawings below. The following embodiments are only used as examples for explaining the technical solutions of the present invention, and should not be construed as limiting the protective scope of the present invention.

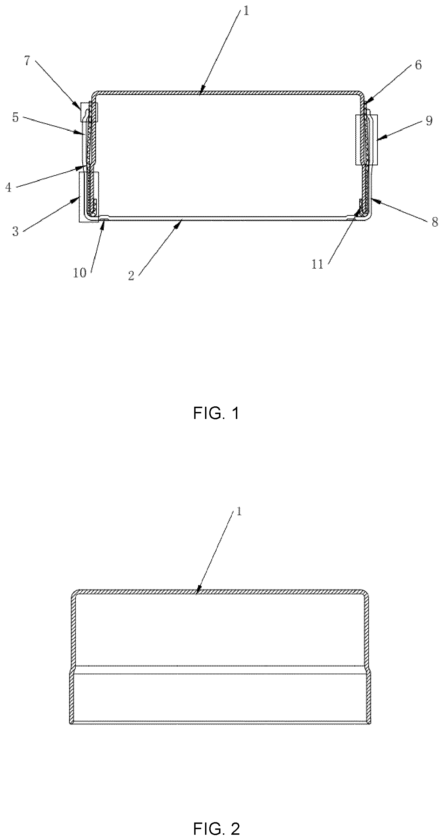

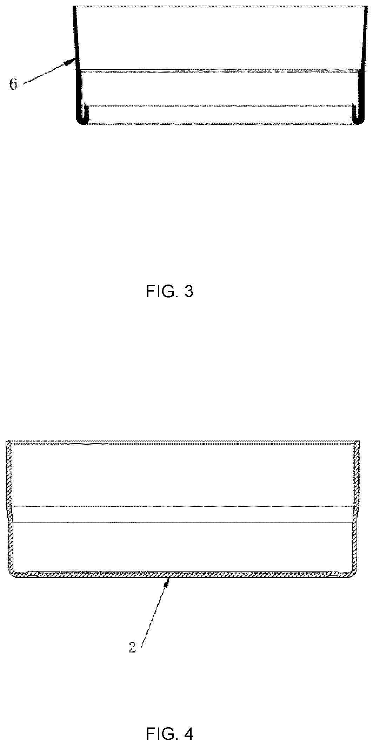

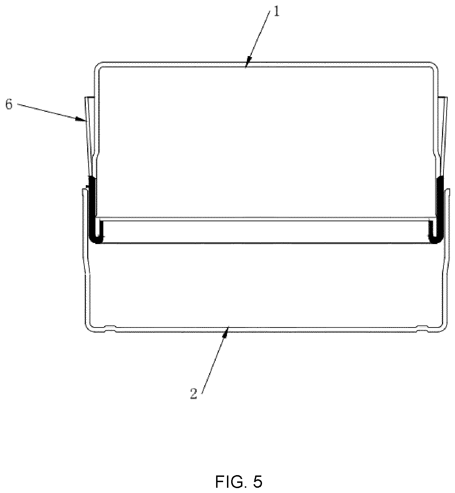

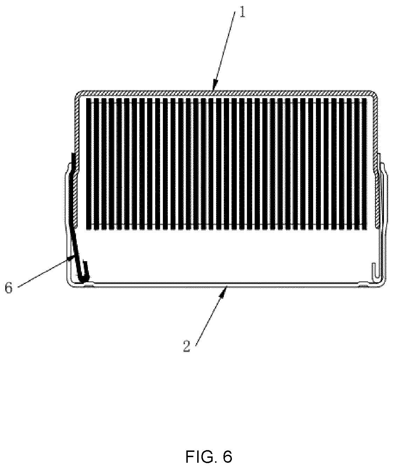

As shown in Fig. 1 to Fig. 6, the miniature button rechargeable lithium battery structure assembly, includes the upper housing 1, the lower housing 2 and the apron 6. The upper housing 1 is snap-fit into the lower housing 2, and the side wall of the upper housing 1 and the side wall of lower housing 2 are sealed with the apron 6.

The wall thickness of the apron 6 is gradually increased along an installation direction, and a gradually changing wall thickness of the apron is 0.01 to 0.1 mm.

Each of the upper housing 1 and the lower housing 2 includes the cup body 8, and the cup opening of the cup body 8 is connected to the extension guide barrel 5 by the gradually expanding guide barrel 4, wherein the gradually expanding guide barrel is a barrel that gradually increases in a radial direction; an end of the extension barrel is connected to an end of the gradually expanding guide barrel, and a diameter of the extension barrel is bigger than a diameter of the cup body, wherein the cup body, the gradually expanding guide barrel, the extension guide barrel and the apron may adopt one or more of shapes that have coating functions, such as a square shape, an oval shape, a cylindrical shape and the like.

The lower portion of the apron is also provided with a fold 11 that extends inwardly, the end of the extension guide barrel of the upper housing is inserted in the area between the fold 11 and the side wall of the apron, to implement performing activity insertion on the apron when assembling.

In an assembled state, the extension guide barrel 5 of the upper housing 1 is extended to the cup body 8 of the lower housing 2, the primary sealing area 3 is formed between the extension guide barrel 5 of the upper housing 1 and the cup body 8 of the lower housing 2 by the apron 6, and the secondary sealing area 7 is formed between the cup body 8 of the upper housing 1 and an end of the extension guide barrel 5 of the lower housing 2 by the apron 6.

The area from the neck of the lower housing to the end of the extension guide barrel of the upper housing is the pressure relief active area 9. In a pressure relief state, the upper housing 1 moves upwardly, the end of the extension guide barrel of the upper housing slides to the neck of the lower housing, the upper housing and the lower housing are separated from the primary sealing area and the secondary sealing area, and an electrolyte in the battery overflows from the end of the lower housing 2 along the pressure relief gap.

The end of the extension guide barrel 5 of the lower housing 2 is provided in a neck shape.

The pressure relief gap is disposed between, the portion where the lower housing 2 and the upper housing 1 are between the primary sealing area and the secondary sealing area, and the apron 6.

The outer wall of the apron 6 is provided with the glue layer, and the outer wall of the apron 6 is fixed to the inner wall of the lower housing 2 by the glue layer.

The apron 6 adopts any one of PEEK, PEI and PI.

Specifically, the pressure groove 10 is disposed on the bottom surface of the cup body of the lower housing to implement the stable assembling when assembling.

The axial sealing amount of the primary sealing area is 1.5 to 2.5 mm, the axial sealing amount of the secondary sealing area is 0.1 to 0.5 mm, the pressure relief active area 9 is disposed between the primary sealing area and the secondary sealing area, and the axial displacement amount of the pressure relief active area 9 is 1.5 to 2.0 mm. In an assembled state, the proportion of the three may be 10:8:1.

At present, these types of batteries are a series of batteries with conventional models of 0854/1054/1254/1454/1654. Model 1254 battery is an example. The data collection and analysis are performed on specifications and performances of batteries of respective manufacturers and the new structure of the present application. The results are presented in the following table.

| Brand | Size of outer shape (mm) | | Standard capacity (mAh) | Volume (mm³) | Ratio of capacity to volume | Explosion-proof structure | Defect of structure |
|---|---|---|---|---|---|---|---|
| | Diametter | Height | | | | | |
| LIR1254 | 12.5 | 5.4 | 45 | 211.95 | 21.23% | Null | Having explosion risk |
| CP1254 (1) | 12 | 5.4 | 50 | 203.472 | 24.57% | Piston side hole pressure relief | Bad sealing effect and low manufacturing yield of product |
| CP1254 (2) | 12.1 | 5.4 | 60 | 205.1676 | 29.24% | Pressure relief without seal | Bad sealing effect and low manufacturing yield of product |
| CP1255 | 12.5 | 5.5 | 50 | 215.875 | 23.16% | Null | Having explosion risk |
| The present product | 12 | 5.4 | 80 | 203.472 | 31.95% | Movable gap pressure relief | Good sealing effect and 100% sealing yield |

The table shows that Brand CP1254(2) battery is a battery having the largest ratio of capacity to volume in the current market, and its explosion-proof structure is a structure without a seal. Due to the bad sealing effect of the structure, the yield is reduced because of electrolyte leakage and failure, which is caused by liquid leakage in the use of the battery. Brands LIR1254 and CP1254(2) can have good sealing performance, however, compared with other products, volume is large, capacity is low, and the ratio of capacity to volume is only 21.23% and 23.16%. In order to improve the sealing effect, the explosion-proof structure has to be cancelled, therefore reducing the security of the battery.

Wall thicknesses of the upper housing and the lower housing in the prior art are 0.2 to 0.25 mm, while the wall thickness of the upper housing and the lower housing of the present product in this application is 0.15 mm. Specifically, the wall thickness of the apron in the prior art is 0.2 to 0.25 mm, while the wall thickness of the present product is 0.08 mm. Compared with the prior art, the structure of the present product saves the space, thereby improving the ratio of capacity to volume.

Through the data of the present solution, it is clear that the size of the housing of the present solution is the same as the size of CP1254(1). That is, it is possible to implement the product while still adopting the existing mold, thereby saving the cost of using a new mold, in turn greatly reducing the economic expense and labor. By changing the thickness and structure of the apron thereof, the capacity is improved, and the external volume is reduced after completing the assembling, such that the ratio of capacity to volume reaches up to 31.95%. This is 2.71% higher than the highest ratio of capacity to volume of 29.24% in the existing battery, and is more than five times of 0.5% according to the prior art. The higher percentage increase of 2.71% may improve the endurance time of battery being used for 8 hours continuously. When the battery is applied to a Bluetooth earphone, according to the use time of the earphone, the average time of using the earphone is approximately 1.5 hours. The endurance time of the product being used continuously for 8 hours a day can, at least, reach up to 6 days without having to recharge the product, which reduces the charging times of the battery. The discharging and charging times of the battery can be reduced while improving the inconvenience of charging the battery, and the lifetime of the battery can be extended.

A cross angle between the side walls of the gradually expanding guide barrel in a cross-section direction is 10 to 25°. An outer wall of the apron may also be disposed in a gradually expanding manner, and a cross angle between the side walls of the apron in a cross-section direction is 3 to 15°.

A radial offset between the extension guide barrel and the cup body is 0.05 to 0.1 mm; wherein a height of the cup body of the upper housing is 1.91 mm; a height of the cup body of the lower housing is 1.74 mm; and an axis length of the extension guide barrel of the lower housing is 2.24 mm.

A gradually changing wall thickness of the apron is 0.01 to 0.1 mm; and a size of the apron at the primary sealing area is 1.5 mm to 2.5 mm, preferably, 2.12 mm.

The magnitude of interference between the upper housing and the apron is 0.02 to 0.1 mm, the gap between the apron and the side wall of the lower housing is 0.05 mm, and the magnitude of interference between the lower housing and the primary sealing area of the apron is 0.02 to 0.05 mm.

The sealed assembly has a certain vertical activity amount, about 2.0 to 2.5 mm. When the pressure of the internal cabin of the battery is too large, the upper housing, the apron and the lower housing will implement an axial movement within 2.0 mm under the effect of pressure, so that the primary sealing area of the battery is partially destroyed, thereby implementing the primary pressure relief of the battery.

When the internal pressure of the battery increases rapidly, the primary sealing area will be entirely destroyed, and an axial movement amount is greater than 2.0 mm, so that the battery pressure is opened along a gap cooperation position between the apron and the lower housing, to release the internal pressure of the battery to the gap between the upper housing and the apron of the battery.

When the pressure in the gap between the lower housing and the apron of the battery reaches an upper limit of retention in the secondary sealing area, the secondary sealing area of the battery will be opened to implement external discharging of the internal pressure of the battery.

The gap of the active area functions as that, after the internal pressure of the battery increases, the size of the active area gradually reduces, and when the size is equal to or close to 0, a side wall gap of three-piece is opened, the pressure inside the battery will be released along the side wall, thereby protecting the battery.

When the size is close to 0, the neck of the secondary sealing area performs a function of protecting the upper housing from being popped, thereby protecting the security of other adjacent parts.

Accordingly, the present invention can solve problems of low yield and bad reliability of products caused due to low capacity and competing requirements between the security and the sealing performance of the current miniature rechargeable battery. Through the experimental verification, the size of the present product is stable, the quality is improved, and the yield reaches up to 99.5%. Thus, the mold structure greatly improves the yield and production efficiency of this type of battery. The size, capacity, security, sealing performance and appearance of the present product all exceed parameter requirements of the current similar products.

At last, it should be noted that the above embodiments are only used for explaining the technical solutions of the present invention, rather than limiting the present invention. Although detailed descriptions are made to the present invention with reference to the aforementioned embodiments, those skilled in the art should understand that modifications or equivalent substitutions may be performed on the technical solutions recorded in the aforementioned embodiments or on partial or entire technical features therein. These modifications or substitutions will not make the essences of corresponding technical solutions depart from the scope of the present invention, and shall fall within the scope of the claims and description of the present invention.

## Claims

1. A miniature button rechargeable lithium battery structure assembly, comprising an upper housing (1), a lower housing (2) and an apron (6); wherein, the upper housing (1) is snap-fit into the lower housing (2), and a side wall of the upper housing (1) and a side wall of the lower housing (2) are sealed with the apron (6).

2. The miniature button rechargeable lithium battery structure assembly of claim 1, wherein, a wall thickness of the apron (6) is gradually increased along an installation direction.

3. The miniature button rechargeable lithium battery structure assembly of claim 1, wherein, an outer wall of the apron (6) is provided with a glue layer, and is fixed to an inner wall of the lower housing (2) by the glue layer.

4. The miniature button rechargeable lithium battery structure assembly of claim 1, wherein, each of the upper housing (1) and the lower housing (2) comprises a cup body (8), and a cup opening of the cup body (8) is connected to an extension guide barrel (5) by a gradually expanding guide barrel (4).

5. The miniature button rechargeable lithium battery structure assembly of claim 4, wherein, in an assembled state, the extension guide barrel (5) of the upper housing (1) is extended to the cup body (8) of the lower housing (2), a primary sealing area (3) is formed between the extension guide barrel (5) of the upper housing (1) and the cup body (8) of the lower housing (2) by the apron (6), and a secondary sealing area (7) is formed between the cup body (8) of the upper housing (1) and an end of the extension guide barrel (5) of the lower housing (2) by the apron (6).

6. The miniature button rechargeable lithium battery structure assembly of claim 5, wherein, the end of the extension guide barrel (5) of the lower housing (2) is provided in a neck shape.

7. The miniature button rechargeable lithium battery structure assembly of claim 5, wherein, an area between the extension guide barrel (5) of the lower housing (2) and the cup body (8) of the upper housing (1) is provided with a gap, and the gap is between the primary sealing area (3) and the secondary sealing area (7), and a pressure relief gap is formed between the gap and the apron (6).

8. The miniature button rechargeable lithium battery structure assembly of claim 6, wherein, an area from the neck of the lower housing (2) to an end of the extension guide barrel (5) of the upper housing (1) is a pressure relief active area (9).

9. The miniature button rechargeable lithium battery structure assembly of claim 8, wherein, in a pressure relief state, the end of the extension guide barrel (5) of the upper housing (1) slides over to the neck of the lower housing (2), the upper housing (1) and the lower housing (2) are separated from the primary sealing area (3) and the secondary sealing area (7), and an electrolyte in the battery overflows from the end of the lower housing (2) along the pressure relief gap.

10. The miniature button rechargeable lithium battery structure assembly of claim 1, wherein, the apron (6) adopts any one of PEEK, PEI or PI.
